Europäisches Patentamt

European Patent Office

Office européen des brevets

(11) Publication number: **0 311 209 B1**

# EUROPEAN PATENT SPECIFICATION

(45) Date of publication of patent specification: **12.01.94**   (51) Int. Cl.⁵: **C09D 7/14**, C09D 17/00

(21) Application number: **88202206.4**

(22) Date of filing: **04.10.88**

(54) **Paint colourizing system based on base paint and pigment paste.**

(30) Priority: **05.10.87 NL 8702374**

(43) Date of publication of application:
**12.04.89 Bulletin 89/15**

(45) Publication of the grant of the patent:
**12.01.94 Bulletin 94/02**

(84) Designated Contracting States:
**AT BE CH DE ES FR GB GR IT LI LU NL SE**

(56) References cited:
**FR-A- 1 178 404
NL-A- 246 388**

(73) Proprietor: **VAN WIJHE BEHEER B.V.
Russenweg 2-4
NL-8041 AL Zwolle(NL)**

(72) Inventor: **van Wijhe, Dirk Heinrich
Hugo de Vrieslaan la
NL-804 BL Zwolle(NL)**

(74) Representative: **Baarslag, Aldert D. et al
Nederlandsch Octrooibureau
Scheveningseweg 82
P.O. Box 29720
NL-2502 LS 's-Gravenhage (NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.10/3.9/3.3.3)

## Description

The invention relates to a process for producing a paint having a desired colour, based on the use of base paint and pigment pastes.

FR-A-1,178,404 discloses a process for preparing a synthetic paint by mixing a pigment concentrate containing 37-72% by weight of pigment, 14-21% by weight of binder resin, and an organic solvent with a clear base paint containing 13-40% by weight of a binder resin and further constituents.

Paint producing systems are generally known under the name of colour mixing system and are marketed by virtually every large print manufacturer. The equipment, pigment paste and base paints can be found in distribution centres and shops. These are systems which are based on a fairly large number of base paints per type of product.

Standard pigment pastes are so-called "universal" and are used to tinge both synthetic base paints and water-reducible base paints. In addition to pigment, they contain thickeners, water, organic solvents, such as glycols, and auxiliary agents for adjusting the total balance.

In the case of pigment pastes which are used specifically for tingeing synthetic base paints, a quantity of binder (for example, of alkyd resin) is sometimes present.

The base paints have a composition which is dependent on the intended application. Thus, a distinction is made between base paints for high-gloss paints, silk-gloss paints, latex paints, chlorinated rubber paints, opaque staining paints, transparent staining paints, etc. Such base paints then always contain virtually the entire quantity of binder, for example alkyd resin, required. Because the pigment paste can be added only in a limited quantity, a large number of base paints are necessary which already contain a quantity of pigment. The addition of the pigment pastes then adjusts the colours to the correct tones. In general, 5-10 base paints per type of paint are employed, that is to say, 5-10 base paints for high gloss, 5-10 base paints for silk gloss etc. Colours for base paints are therefore, for example, white, midwhite, clear, yellow, red, blue and the like.

All these systems therefore contain a compromise in the base paint and in the pigment paste in order to avoid having to have all too large a number of base paints and pigment pastes. As a result of this, discoloration, loss in quality and the like occur frequently. The use of glycols in the universal pigment pastes also leads to premature ageing phenomena. The function of glycols is to improve the solubility in water by grinding the pigments in glycols, which is, of course, necessary in order to be able to mix a water-based paint.

It has now been found that in a paint system of the type described in the introduction, it is possible to make do with two base paints and, in particular, one white base paint for pastel shades and one clear base paint for deep tones by mixing:

a) one or more pigment pastes containing organic solvent and 23-62 % by weight of binder if the paint is a synthetic paint, or containing 15-45 % by weight of water-miscible glycols if the paint is a water-reducible paint, and further containing 10-65 % by weight of pigment and optional further standard additives; and

b) a base paint containing 20-60 % by weight of a binder and further standard constituents;

the proportion of the pigment pastes with respect to the total volume of the paint being up to 7.5 % by volume in case of a white base paint and being 10-45 % by volume in case of a clear base paint.

It is particularly surprising that such a high percentage of binder (for example, alkyd resin) can be taken up in the pigment paste without disadvantageous phenomena occurring at the same time. The shelf life of the pigment pastes is good and the applied, ready paint layer does not exhibit any accelerated ageing either.

The base paint and pigment paste are combined, in a proportion which depends on the degree of filling per type of product, and on whether a synthetic or a water reducible paint is produced. To obtain a very large colour range without loss in quality of the final product, it is expedient to use different pigment pastes for synthetic and water-reducible versions.

The different types of base paints may be categorized as follows, the stated quantities of pigment paste being advisable.

| Synthetic paints | | |
|---|---|---|
| Description | Base paint | Pigment paste. vol.% |
| - high-gloss varnishes | White | ≦ 7.5 |
| - industrial varnishes | Clear | 45 |
| - satin-gloss varnish paints | White | ≦ 7.5 |
| - opaque primers chlorinated rubber paints | Clear | 30 |

| Synthetic paints | | |
|---|---|---|
| Description | Base paint | Pigment paste. vol.% |
| - other solvent-containing paints (including multi-component paints) | White | ≦ 7.5 |
| | Clear | 30-45 |

| Water-reducible paints | | |
|---|---|---|
| Description | Base paint | Pigment paste. vol.% |
| - acrylic paints | White | ≦ 5 |
| - high-quality wall paints | Clear | 10 |
| - general wall paints | White | ≦ 2.5 |
| (mostly for indoor use) | Clear | 10 |
| - other water-reducible | White | ≦ 2.5-5 |
| paints (including multi-component paints) | Clear | 10 |

Base paints for the synthetic group are paints which are borne by organic solvents. For the water-reducible group, the base paints are made up with water-borne binders. The synthetic pigment paste contains, as carrier material, a considerable portion of binder (for example, alkyd resin), while the pigment paste for the aqueous systems contains a considerable percentage (15-45 % by weight) of water-miscible glycols.

In the method according to the invention, the old philosophy of tinting a paint has essentially been abandoned, but the starting point is now two components which together form the paint. For the synthetic group, the pigment paste no longer in fact contains the liquid-borne pigment alone, but also a considerable quantity of binder. For use, up to 45 % by volume of pigment paste is expediently used for synthetic base paint, calculated on the basis of the total of pigment paste and base paint. A considerably larger ratio than was standard hitherto. Up to 20 % by volume of pigment paste (synthetic) or 7.5 % by volume of pigment paste (water-reducible) respectively was standard.

Pigment pastes may, for example, have the composition as described in the table entitled Examples and Compositions and in the example of the preparation of a pigment paste.

The method of preparation of base paints and colour pastes is as is usual in the standard practice in the paint industry. The following normally applies for all the operations:

a) making up of a preproduct of, for example, binder and/or solvent with a few additives;

b) addition of pigment and/or fillers;

c) dispersion or grinding to the required fineness;

d) addition of remainder of constituents;

e) establishment of required viscosity and colouring power.

As a result of the product items being matched to each other, the choices of carrier material and pigment combinations such as are normally obtainable for all types of paint confine the intended pattern of quality to a colourizing system in which, according to the invention, any colour can be obtained by means of two base paints per type of product by means of a colour mixing machine making use of prepacked quantities of base paint and adding to the prepacked base paint both volumetrically and gravimetrically.

The "white" base paints contain a white pigment as colour-determining constituent. The "clear" base paints do not contain any, or contain few, colouring constituents.

The pigment pastes are matched mutually to each other in a manner such that, for the diverse types of final product, the quality of the paint is not affected in an adverse sense in terms of colour.

Alkyd resin is suitable as binder both for use in the base paint and in the pigment paste. Of course, other known binders for paints and pigment pastes can also be used. For two-component paints, suitable binders are epoxy resin and a polyurethane.

In the case of water-reducible pigment pastes, it is not necessary to take up any binder in the pigment paste.

In the case of two-component paints, the pigment can be taken up in the hardener or in the resin. The pigment-containing component is then added to the resin component in the tin. Of course, it is also possible to introduce the hardener as a separate component into the tin when mixing base paint and pigment paste.

Example of colour formulation:

| Base paint, white, for 5 litres | = 4.625 litres |
|---|---|
| Paste, yellow 1 | = 0.250 litre |
| Paste, red 1 | = 0.115 litre |
| Paste, black | = 0.010 litre |
| | 5.000 litres |

| Base paint, clear, for 5 litres | = 3.50 litres |
|---|---|
| Paste, yellow 2 | = 0.510 litre |
| Paste, orange | = 0.215 litre |
| Paste, green | = 0.775 litre |
| | 5.000 litres |

Colourizing system

The old philosophy (followed hitherto) was to tint the base paints with a small amount of pigment paste. To achieve sufficient hiding power, many base paints were required in different colours. The new philosophy (the system developed here according to the invention) is few base paints (two). To obtain sufficient hiding power a large amount of pigment paste is now necessary, in particular, for the clear base paint. The standard ratios contain only a few per cent of colouring paste compared with 10 to 45 % by volume (in the two-base-paint system) for the clear base paint. The number of base paints in the old philosophy was approximately 5 to 10 per type of product.

Using the standard components, pigment pastes and base paints can be prepared in the usual manner. Examples of suitable compositions are the following:

Examples Compositions

| | High gloss varnish Base paint | | Satin gloss varnish Base paint | | Outdoor stain Base paint | | Industrial varnish Base paint | |
|---|---|---|---|---|---|---|---|---|
| | White | Transp. | White | Transp. | White | Transp. | White | Transp. |
| Binder 100% | 38.9 | 57.8 | 32.3 | 44.- | 34.6 | 44.- | 33.- | 45.- |
| Pigment | 33.- | - | 28.5 | - | 27.5 | - | 28.- | - |
| Solvent diluant | 20.5 | 30.- | 34.2 | 42.- | 31.4 | 37.7 | 30.8 | 44.8 |
| Additives | 7.6 | 12.2 | 5.- | 13.2 | 6.5 | 17.5 | 7.4 | 10.2 |

Pigment pastes

| | Yellow 1 | Yellow 2 | Yellow 3 | Yellow 4 | Orange | Red 1 | Red 2 | Red 3 | Red 4 | Blue | Green 1 | Green 2 | White | Black |
|---|---|---|---|---|---|---|---|---|---|---|---|---|---|---|
| Binder 100% | 56.- | 38.4 | 38.5 | 38.5 | 55.- | 49.4 | 39.9 | 54.5 | 60.1 | 54.3 | 61.4 | 39.9 | 23.7 | 58.4 |
| Pigment | 16.- | 35.- | 35.- | 35.- | 20.- | 30.- | 35.- | 17.- | 13.- | 12.5 | 12.5 | 35.- | 62.5 | 6.5 |
| Solvent | 25.3 | 23.4 | 23.8 | 23.8 | 22.2 | 17.5 | 23.2 | 27.7 | 23.7 | 31.2 | 23.2 | 22.- | 9.7 | 30.5 |
| Additives | 2.7 | 3.2 | 2.7 | 2.7 | 2.8 | 3.1 | 1.9 | 0.8 | 3.2 | 2.- | 2.9 | 3.1 | 4.1 | 4.6 |

| | Wall paint Base paint | | Acrylic paint Base paint | |
|---|---|---|---|---|
| | White | Transp. | White | Transp. |
| Binder 50% | 40.- | 49.7 | 49.2 | 60.- |
| Pigment | 20.- | - | 23.- | - |
| Solvent/water | 16.2 | 25.2 | 15.7 | 24.9 |
| Additives | 23.8 | 25.1 | 12.1 | 15.1 |

Pigment pastes

| | Yellow 1 | Yellow 2 | Yellow 3 | Yellow 4 | Orange | Red 1 | Red 2 | Red 3 | Red 4 | Blue | Green 1 | Green 2 | White | Black |
|---|---|---|---|---|---|---|---|---|---|---|---|---|---|---|
| Binder | - | - | - | - | - | - | - | - | - | - | - | - | - | - |
| Pigment | 50.- | 40.- | 55.- | 55.- | 45.- | 60.- | 60.- | 27.5 | 30.- | 35.- | 35.- | 50.- | 55.- | 35.- |
| Solvent/water | 40.4 | 50.9 | 33.9 | 34.9 | 43.9 | 29.9 | 29.9 | 62.4 | 59.9 | 54.9 | 54.9 | 41.9 | 34.9 | 54.9 |
| Additives | 9.6 | 9.1 | 11.1 | 10.1 | 11.1 | 10.1 | 10.1 | 10.1 | 10.1 | 10.1 | 10.1 | 8.1 | 10.1 | 10.1 |

Example of a white base paint for an opaque semi-gloss outdoor stain.

| Description | Quantity | Preparation |
|---|---|---|
| Binder, 60% | 21.00 | weigh out |
| Pigment moistener | 0.40 | add and mix |
| Rheological additive | 0.40 | add and mix |
| Titanium dioxide | 27.50 | add during mixing |
| Filler | 4.00 | add during mixing disperse to desired fineness |
| Solvent | 4.50 | add and stir in |
| Binder, 60% | 31.00 | add during mixing |
| Drier | 1.50 | add during mixing |
| Anti-skinning agent Binder, 60% | 0.20 | add during mixing |
| solvent | 9.50 | adjustment to viscosity and colouring power |

Example of a clear base paint for an opaque semi-gloss outdoor stain

| Description | Quantity | Preparation |
|---|---|---|
| Binder, 60% | 21.00 | weigh out |
| Pigment moistener | 0.40 | add and mix |
| Rheological additive | 0.60 | add and mix |
| Filler | 12.60 | add during mixing disperse to required fineness |

Example of a green pigment paste

| Description | Quantity | Preparation |
|---|---|---|
| Binder, 70% | 37.00 | weigh out |
| Solvent | 2.00 | add during mixing |
| Pigment moistener | 0.40 | add during mixing |
| Rheological additive | 1.50 | add during mixing |
| Chromium oxide green | 35.00 | disperse to required fineness |
| Binder, 70% | 20.00 | add during mixing |
| Anti-skinning agent | 2.00 | add during mixing |
| Solvent/binder | 2.10 | grind to colouring power |

- As binder, use may be made of a long-oil alkyd based on soya-bean oil/pentaerithritol/phthalic anhydride with an oil content of approximately 63% and a phthalic anhydride content of approximately 25% dissolved in white spirit.
- As pigment moistener, use can be made of a soybean lecithin derivative or a blend of anion-active substances based on salts of polycarboxylic acids.
- As rheological additive, a substance derived from an organically modified smectite may be employed.
- As solvent, a choice may be made between white spirit and another high-boiling aliphatic solvent.
- As filler, a mixture of, for example, diatomaceous earth and selected micas and talc may be employed.
- As anti-skinning agent, use may be made of a substance based on butyral dioxime or methyl ethylketoxime.

Example of an opaque outdoor stain in a light-green colour

| | |
|---|---|
| - White base paint | 92.5 % by volume |
| - Pigment paste, green | 7.5 % by volume |

Example of an opaque outdoor stain in a green full tone.

6

| - Clear base paint | 70 % by volume |
|---|---|
| - Pigment paste, green | 30 % by volume |

The preparation of high-gloss and silk-gloss varnish paints does not differ from this in principle.

The essential difference is in the choice of the constituents (see description) of the base paint: the filler is absent (high gloss) or is present to a considerable extent (silk gloss).

To prepare water-reducible paints, homopolymers and copolymers of acrylate dispersions are used in a content of 45-55 % in water.

The synthetic paints prepared according to the invention were tested for shelf life and compared with paint prepared by the universal system.

| Type of paint | Universal system | According to the invention |
|---|---|---|
| Storage period | | |
| Opaque staining paint | 3 years | 4-5 years |
| High-gloss varnish | 3-4 years | 5-6 years paint |
| | | |
| Determining factors | | |
| Hiding power | -/- | + |
| Drying | -/- | + |
| Colour retention | -/- | + |
| Gloss retention | -/- | + |

**Claims**

1. Process for producing a paint having a desired colour, characterised by mixing:

   a) one or more pigment pastes containing organic solvent and 23-62 % by weight of binder if the paint is a synthetic paint, or containing 15-45 % by weight of water-miscible glycols if the paint is a water-reducible paint, and further containing 10-65 % by weight of pigment and optional further standard additives; and

   b) a base paint containing 20-60 % by weight of a binder and further standard constituents;

   the proportion of the pigment pastes with respect to the total volume of the paint being up to 7.5 % by volume in case of a white base paint and being 10-45 % by volume in case of a clear base paint.

2. Process according to claim 1, wherein the paint is a synthetic paint and the pigment pastes contain 12-63 % by weight of pigment.

3. Process according to claim 2, wherein the base paint contains 32-58 % by weight of binder.

4. Process according to any one of claims 1-3, wherein the binder is an alkyd resin.

5. Pigment paste to be used in the process according to claim 1 for producing a synthetic paint, containing 23-62 % by weight of a binder, organic solvent, 10-65 % by weight of pigment and optional further standard additives.

**Patentansprüche**

1. Verfahren zur Herstellung einer Anstrichfarbe, die eine gewünschte Farbe aufweist, dadurch gekennzeichnet, daß folgendes vermischt wird:

   a) eine oder mehrere Pigmentpasten, enthaltend organisches Lösungsmittel und 23-62 Gew.-% Bindemittel, wenn die Anstrichfarbe eine synthetische Anstrichfarbe ist, oder enthaltend 15-45 Gew.-% wassermischbare Glycole, wenn die Anstrichfarbe eine wasserreduzierbare Anstrichfarbe ist, und ferner enthaltend 10-65 Gew.-% Pigment und wahlweise weitere Standard-Additive; und

   b) eine Grundfarbe, enthaltend 20-60 Gew.-% eines Bindemittels und weitere Standard-Bestandteile; wobei der Anteil der Pigmentpasten bezüglich des Gesamtvolumens der Anstrichfarbe bis zu 7,5 Vol.-% im Fall einer weißen Grundfarbe und 10-45 Vol.-% im Falle einer klaren Grundfarbe beträgt.

2. Verfahren nach Anspruch 1, bei dem die Anstrichfarbe eine synthetische Anstrichfarbe ist und die Pigmentpasten 12-63 Gew.-% Pigment enthalten.

3. Verfahren nach Anspruch 2, bei dem die Grundfarbe 32-58 Gew.-% Bindemittel enthält.

4. Verfahren nach einem der Ansprüche 1-3, bei dem das Bindemittel ein Alkydharz ist.

5. Pigmentpaste, die gemäß dem Verfahren nach Anspruch 1 verwendet wird, um eine synthetische Anstrichfarbe herzustellen, die 23-62 Gew.-% Bindemittel, organisches Lösungsmittel, 10-65 Gew.-% Pigment und wahlweise weitere Standard-Additive enthält.

**Revendications**

1. Procédé de fabrication d'une peinture ayant une couleur désirée caractérisé par le mélange :

   a) d'une ou plusieurs pâtes pigmentaires contenant un solvant organique et 23 à 62 % en poids d'un liant si la peinture est une peinture synthétique, ou contenant 15 à 45 % en poids de glycols miscibles dans l'eau si la peinture est une peinture à l'eau, et contenant en outre 10 à 65 % en poids d'un pigment et de façon optionnelle des additifs conventionnels supplémentaires; et

   b) d'une peinture de base contenant de 20 à 60 % en poids d'un liant et des constituants conventionnels supplémentaires ; la proportion de pâtes pigmentaires par rapport au volume total de peinture allant jusqu'à 7,5 % en volume dans le cas d'une peinture de base blanche et étant comprise entre 10 et 45 % en volume dans le cas d'une peinture de base claire.

2. Procédé selon la revendication 1, dans lequel la peinture est une peinture synthétique et les pâtes pigmentaires contiennent 12 à 63 % en poids de pigment.

3. Procédé selon la revendication 2, dans lequel la peinture de base contient de 32 à 58 % en poids d'un liant.

4. Procédé selon l'une quelconque des revendications 1 à 3, dans lequel le liant est une résine alkyde.

5. Pâte pigmentaire à utiliser dans le procédé selon la revendication 1 pour la fabrication d'une peinture synthétique, contenant de 23 à 62 % en poids d'un liant, un solvant organique, de 10 à 65 % en poids d'un pigment et de façon optionnelle des additifs conventionnels supplémentaires.